# EUROPEAN PATENT SPECIFICATION

(11) **EP 1 233 411 B1**
(45) Date of publication and mention of the grant of the patent: **24.09.2008**
(21) Application number: 02251094.5
(22) Date of filing: 18.02.2002
(51) Int. Cl.: G11B 7/125, G11B 7/0045

(54) **Optical recording pulse generating apparatus and method for generating optical recording pulse**
Vorrichtung und Verfahren zur Erzeugung von optischen Aufzeichnungspulsen
Dispositif et procédé pour la génération d'impulsations optiques d'enregistrement

(30) Priority: 19.02.2001 KR 2001008136
(43) Date of publication of application: 21.08.2002
(73) Proprietor: SAMSUNG ELECTRONICS CO., LTD., Suwon-City, Kyungki-do (KR)
(72) Inventor: Sea, Jin-gyo, 201-, Suwon-si, Gyeonggi-do (KR)
(74) Representative: Robinson, Ian Michael

(56) References cited:
- EP-A- 0 388 897
- EP-A- 0 978 827
- EP-A- 1 045 378
- EP-A- 1 058 240
- WO-A-99/52103
- PATENT ABSTRACTS OF JAPAN vol. 2000, no. 11, 3 January 2001 (2001-01-03) & JP 2000 215449 A (TAIYO YUDEN CO LTD), 4 August 2000 (2000-08-04) & US 6 480 450 B1 (FUJII TORU ET AL) 12 November 2002 (2002-11-12)

## Description

The present invention relates to an optical recording pulse generating apparatus and a method for generating an optical recording pulse, and more particularly, to an apparatus and a method for generating an optical recording pulse having multi-pulse patterns suitable for high-density and high-speed optical media.

An optical recording pulse having multi-pulse patterns is designed to overcome the disadvantages of a mark edge recording method that enables signals to be recorded on optical media in high density. If a recording mark is long in the mark edge recording method, thermal density causes the trailing edge of the recorded mark to be bigger than the leading edge of the recorded mark, resulting in degradation of the signals recorded on the optical media. As a solution to the problem, the optical recording pulse having multi-pulse patterns is suggested. The optical recording signal comprises multi-pulse chains or multi-pulse trains (hereinafter referred to as multi-pulse).

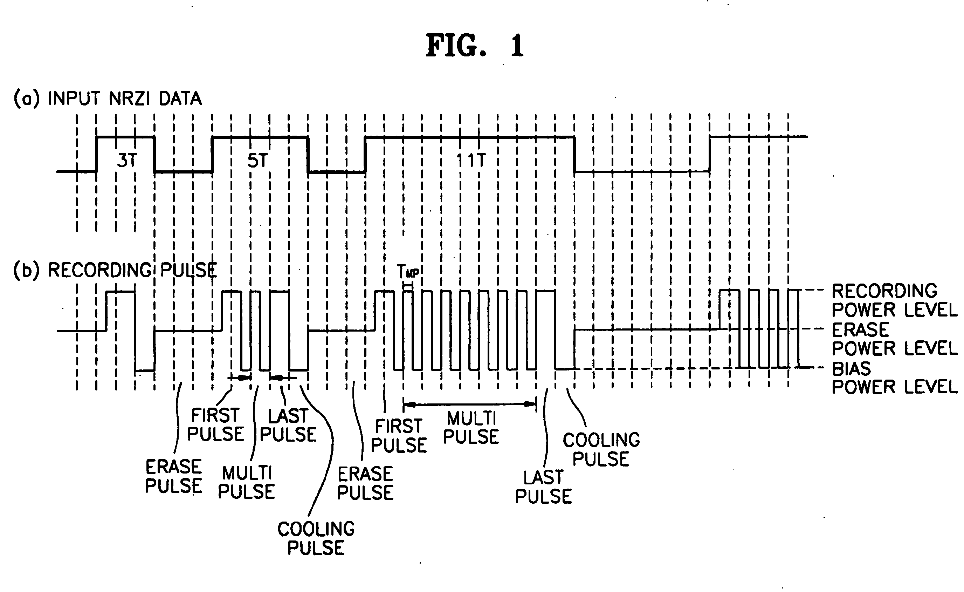

The optical recording pulse having multi-pulse patterns is generated as shown in Figure 1(b) when a Non Return to Zero Inverted (NRZI) data of Figure 1(a) is inputted. As shown in Figure 1(b), the optical recording pulse having the multi-pulse patterns has three levels, that is, a recording power level, an erase power level, and a bias power level. The optical recording pulse having the multi-pulse patterns includes an erase pulse for overwriting, a first pulse, a multi-pulse chain, a last pulse, and a cooling pulse.

Figure 1(b) shows only a bottom-level bias power. However, a bias power corresponding to the erase power shown in Figure 1(b) or a bias power whose level is between the erase power level and the bias power level may be provided. If those two powers in addition to the bottom-level bias power are also considered as bias powers, the number of bias powers is 3.

The erase power level is used to erase a previous record or perform pre-heating before a signal is recorded and is set up selectively. The first pulse has the recording power level and is designed to create the leading edge of the recording mark. With regard to a long recording mark, the multi-pulse is designed to reduce the unevenness of the domain, which may be caused by thermal density. If the optical media are DVD-RAMs or DVD-Rs, the multi-pulse starts from NRZI 5T, whereas if the optical media are DVD-RWs or CD-RWs, the multi-pulse starts from NRZI 4T. The multi-pulses are inserted between the first pulse and the last pulse when the recording mark is created. The multi-pulses alternate between the bottom-level bias power level and the recording power level. The number of pulses in the multi-pulse is determined based on the length of the recording mark. For example, in the case of a DVD-RAM or DVD-R, the number of the multi-pulses is the value obtained as a result of the operation 'NRZI length - 4'. In the case of a DVD-RW or CD-RW, the number of the multi-pulses is the value obtained as a result of the operation 'NRZI length - 3'. The last pulse is used to create the trailing edge of the recording mark and has the recording power level. The cooling pulse has the bias power level, and is used to prevent the recording mark from being too long. Therefore, in the cooling pulse section, a laser power is turned off. The bias power level attained by the cooling pulse can be a bias power level corresponding to the erase power level, the bottom-level bias power level, or the bias power level between the erase power level and the bottom level.

However, when the optical medium is initialized, the width (T_{MP}) of the multi-pulse has a fixed value as shown in 11T of Figure 1(b). Therefore, there is a limit in obtaining an ideal domain configuration on the optical medium.

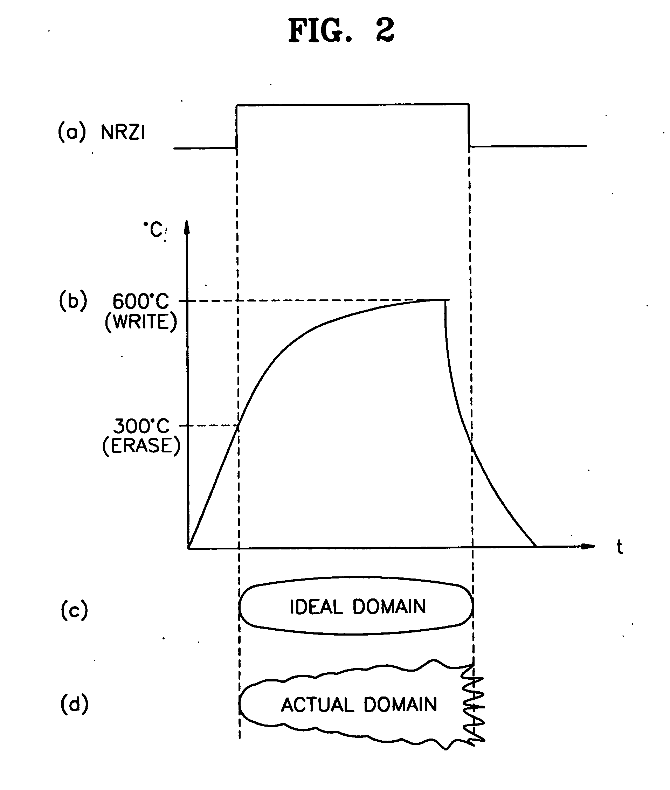

To record the NRZI data shown in Figure 2(a) on a phase-transformation optical medium, the optical recording pulse having multi-pulse patterns are inputted to a laser diode (LD). The LD determines a power level based on the input pulse and heats the recording film. As shown in Figure 2(b), the recording film of the optical medium is in an erase status around 300°C and in a liquid state if the heat rises above 600°C (melting status). Then, the cooling speed of the recording film is adjusted so that desired information can be recorded. Lowering or turning off the power of the laser beam can cool the recording film. In Figure 2(b), the horizontal axis indicates time, and the vertical axis indicates the temperature of the recording film of the optical medium.

A domain is created on the recording film of the optical media by the recording processing as shown in Figure 2(b). The created domain configuration is shown in Figure 2(d). Figure 2(d) shows that the leading edge and the trailing edge on the domain are not even, unlike in the ideal domain configuration shown in Figure 2(c).

The domain corresponds to the NRZI mark on the optical media and a pit on a CD. Therefore, unless the first, middle, and last configurations of the domain are created to be smooth, jitter increases and cross erasure between adjacent tracks occurs. Moreover, cross-talk between adjacent tracks is generated during reproduction. The above problems are more serious for high-density and high-speed optical media or optical media which have a land/groove structure.

EP-A-1 058 240 discloses a method of generating write pulse control signals, wherein timing data includes a first pulse, a multi-pulse train, a last pulse and a cooling pulse, and the starting and ending positions of the pulses are varied for various optical recording media. A bias power control signal, an erase power control signal, a peak power control signal and a cooling power control signal are controlled in synchronism with an input non return to zero inverted (NRZI) signal. This document forms the pre-characterising portion of the claims appended hereto.

EP-A-0 388 897 discloses a write control method for writing optical disk data for writing mark signal parts formed of a series of pulse trains which correspond to the lengths of the marked signal parts.

JP2000215449 discloses a method of generating write pulses having successively reduced pulse widths.

It is an aim of the present invention to provide an apparatus and a method for generating an optical recording pulse having multi-pulse patterns suitable for high-density, high-speed optical media.

According to a first aspect of the present invention there is provided an apparatus for generating an optical recording pulse having a first pulse, a multi-pulse pattern that includes multi-pulses, a last pulse and a cooling pulse to record Non Return to Zero Inverted (NRZI) data, the apparatus comprising: a recording pulse generator for generating an optical recording pulse; characterised by: a controller for identifying a type of optical recording medium to be recorded and controlling the recording pulse generator so that according to the identified type of optical medium or a set recording speed, the width (T_{MP}) of the multi-pulses forming the multi-pulse pattern used to create one mark is set to at least 2 different values.

In addition, preferably, the controller determines where at least two different widths of the multi-pulse should exist on the multi-pulse pattern of the optical recording pulse. Moreover, it is preferable that the controller determines the widths of the multi-pulse in consideration of whether the CAV has been recorded and during the initialization.

According to a second aspect of the present invention there is provided a method for generating an optical recording pulse having a first pulse, a multi-pulse pattern that includes multi-pulses, a last pulse and a cooling pulse to record Non Return to Zero Inverted (NRZI) data, the method comprising: generating an optical recording pulse; characterised by: identifying a type of optical recording medium to be recorded and setting a recording mode so that, depending on the identified type of an optical medium or the recording speed, the width of the multi-pulses forming the multi-pulse pattern used to create one mark is set to at least 2 different values (T_{MP1}, T_{MP2}); and generating the optical recording pulse according to the set widths of the multi-pulses.

For a better understanding of the invention, and to show how embodiments of the same may be carried into effect, reference will now be made, by way of example, to the accompanying diagrammatic drawings in which:
Figure 1 is a waveform diagram of an optical recording pulse having multi-pulse patterns;
Figure 2 is an example showing the recording characteristics of optical media when the optical recording pulse of Figure 1 is used for recording;
Figure 3 is a block diagram of an optical recording pulse generating apparatus according to the present invention;
Figure 4 shows examples of waveforms of the optical recording pulse generated according to the present invention;
Figure 5 is an example showing the recording characteristics of optical media according to the present invention; and
Figure 6 is a flowchart describing an optical recording pulse generation method according to the present invention.

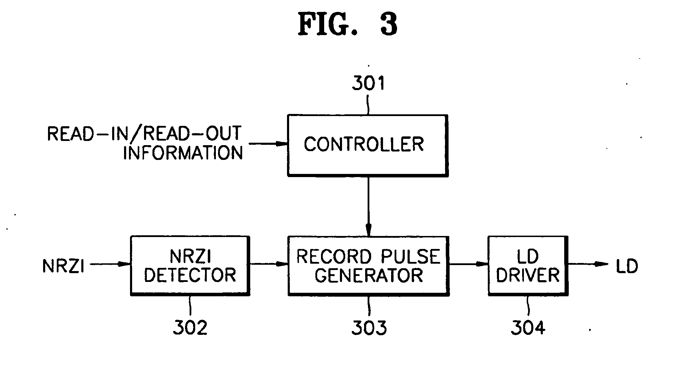

Referring to Figure 3, an optical recording pulse generating apparatus according to the present invention includes a controller 301, a Non Return to Zero Inverted (NRZI) detector 302, a recording pulse generator 303 and a Laser Diode (LD) driver 304.

If an optical medium is inserted, the controller 301 identifies the type of optical medium by reading information from the lead-in area and the lead-out area of the optical medium. The type of optical medium can be identified based on the available recording speed and the type of recording pulse. For example, if different recording pulses are generated depending on whether a DVD-RAM, DVD-R, DVD-RW, DVD+RW or CD-RW is inserted, the controller 301 identifies whether the optical medium is a DVD-RAM, DVD-R, DVD-RW, DVD+RW or CD-RW. However, in the case where the recording pulses are generated according to a manufacturer's specification or other detailed conditions, the type of optical medium can be identified using the detailed conditions. The controller 301 sets a recording speed suitable to the identified type of optical medium.

After the controller 301 identifies the optical medium type and sets the recording speed completely, it sets initial values necessary for recording and reproduction on the optical medium. The initial values include values of the multi-pulse patterns in the optical recording pulse to be generated. In particular, the controller 301 sets the widths (T_{MP}) of the multi-pulse within the multi-pulse chain depending on the optical media type, the recording speed, and the CAV recording.

In this case, the controller can set the width (T_{MP}) of the multi-pulse to be a fixed value within the multi-pulse chain or to be at least two values. In the case where at least two values are set as the widths of the multi-pulse, the controller 301 determines how wide a pulse should be assigned in each area of the multi-pulse chain.

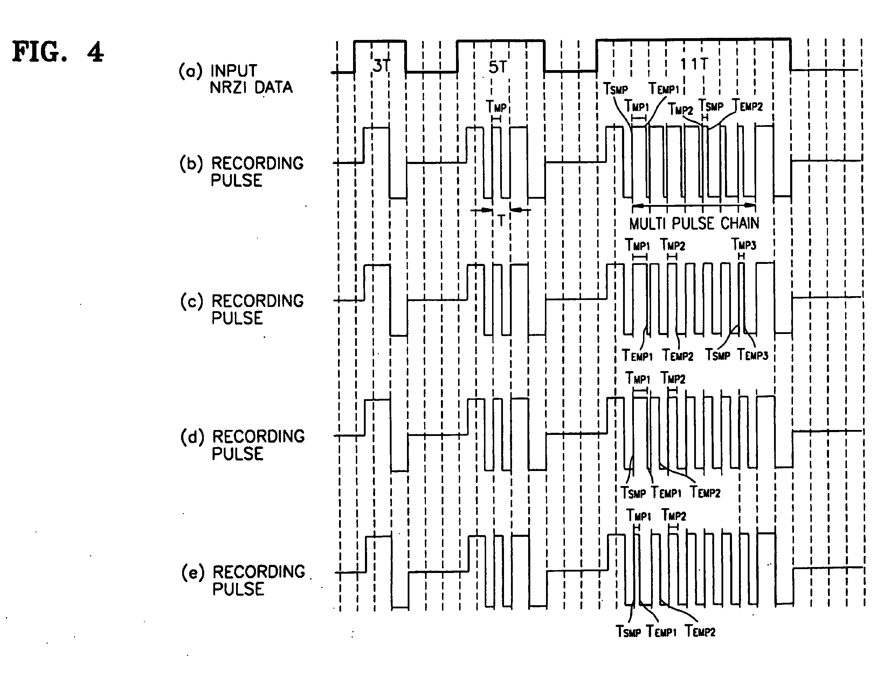

For example, it is assumed that the widths (T_{MP}) of the first four pulses are larger than the pre-fixed value, and the widths of the remaining pulses are smaller than the pre-fixed value. In this case, if the NRZI data shown in Figure 4(a) is input, the optical recording pulses of Figure 4(b) are generated. That is, as shown in Figure 4(b), the first four pulses have widths (T_{MP1}) larger than the pre-fixed value but, starting from the fifth pulse, the remaining pulses have widths (T_{MP2}) smaller than the pre-fixed value.

In addition, it is assumed that the width (T_{MP}) of the first pulse within the multi-pulse chain is bigger than the pre-fixed value, the width (T_{MP}) of the last pulse is smaller than the pre-fixed value, and the widths (T_{MP}) of the pulses between the first pulse and the last pulse are set to be the pre-fixed values. In this case, if the NRZI data shown in Figure 4(a) is input, the optical recording pulses of Figure 4(c) are generated. That is, as shown in Figure 4(c), the first pulse has a width (T_{MP1}) larger than the pre-fixed value, the last pulse has a width (T_{MP3}) smaller than the pre-fixed value, and pulses between the first pulse and the last pulse have a width (T_{MP2}) which is the same as the pre-fixed value.

In another case, it is assumed that the width (T_{MP}) of the first pulse within the multi-pulse chain is larger than the pre-fixed value, and the widths (T_{MP}) of the remaining pulses are the same as the pre-fixed value. In this case, if the NRZI data shown in Figure 4(a) is input, the optical recording pulses of Figure 4(d) are generated. That is, as shown in Figure 4(d), the first pulse has a width (T_{MP1}) bigger than the pre-fixed value, and the remaining pulses have widths (T_{MP2}) the same as the pre-fixed value.

In addition, it is assumed that the width (T_{MP}) of the first pulse within the multi-pulse chain is smaller than the pre-fixed value, and the widths (T_{MP}) of the remaining pulses are the same as the pre-fixed value. In this case, if the NRZI data shown in Figure 4(a) is input, the optical recording pulses of Figure 4(e) are generated. That is, as shown in Figure 4(e), the first pulse has a width (T_{MP1}) smaller than the pre-fixed value, and the remaining pulses have widths (T_{MP2}) the same as the pre-fixed value.

Besides the cases illustrated in Figure 4, the multi-pulse chain can be divided into a first part and a second part. In the first and second parts, the widths of the recording pulses can be set to be different.

As described above, if the width (T_{MP}) of the pulse is set to be variable, the multi-pulse should not exceed the range of the multi-pulse chain of the optical recording pulse. That is, the width (T_{MP}) of the pulse will vary, and the multi-pulse chain range and the number of multi-pulses in the optical recording pulse are maintained.

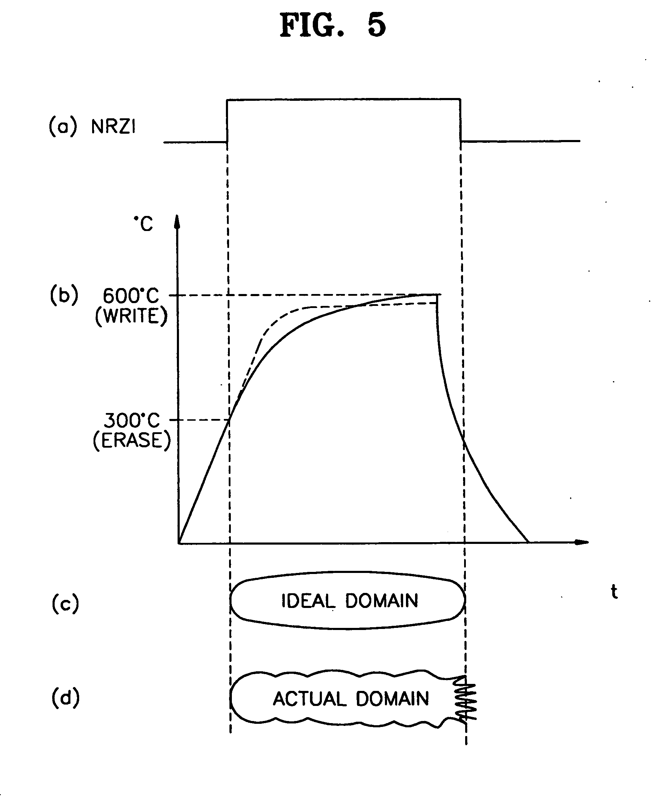

Moreover, the pulse width (T_{MP}) within the multi-pulse chain should be set in such a way that the configuration of the domain created on the optical media will be nearly close to the ideal configuration as shown in Figure 5 in all cases.

That is, as shown in Figure 5(a), the width (T_{MP}) of the multi-pulses is determined within the multi-pulse chain in such a way that the NRZI data of Figure 5(a) will have the recording characteristics illustrated by the dot lines of Figure 5(b). Regardless of the optical medium used, the actual domain, as shown in Figure 5(d), should have a configuration close to that of the ideal domain of Figure 5(c).

During setup of initial values, the controller 301 can change the width (T_{MP}) value of the multi-pulse or the ending value (T_{EMP}) of the multi-pulse in order to adjust the width (T_{MP}) of the multi-pulse. For example, in Figure 4, the controller can set up T_{MP1}, T_{MP2}, and T_{MP3} newly or T_{EMP1}, T_{EMP2}, and T_{EMP3}.

When the NRZI detector 302 receives the NRZI, it detects the type of data to be recorded. That is, the NRZI detector 302 detects the relations between the current mark and the space, and the sizes of the current mark or the space depending on the size of spaces before and after the current mark. Then, the detector 302 provides the detected results to the recording pulse generator 303.

The recording pulse generator 303 generates an optical recording pulse corresponding to the detected results provided by the NRZI detector 302 and the initial values of the optical recording pulse provided by the controller 301. That is, the recording pulse generator 303 generates the optical recording pulse having any of the forms shown in Figures 4(b) through 4(e) depending on the initial values provided by the controller 301.

The LD driver 304 operates the LD (not shown) according to the recording pulse provided by the recording pulse generator 303.

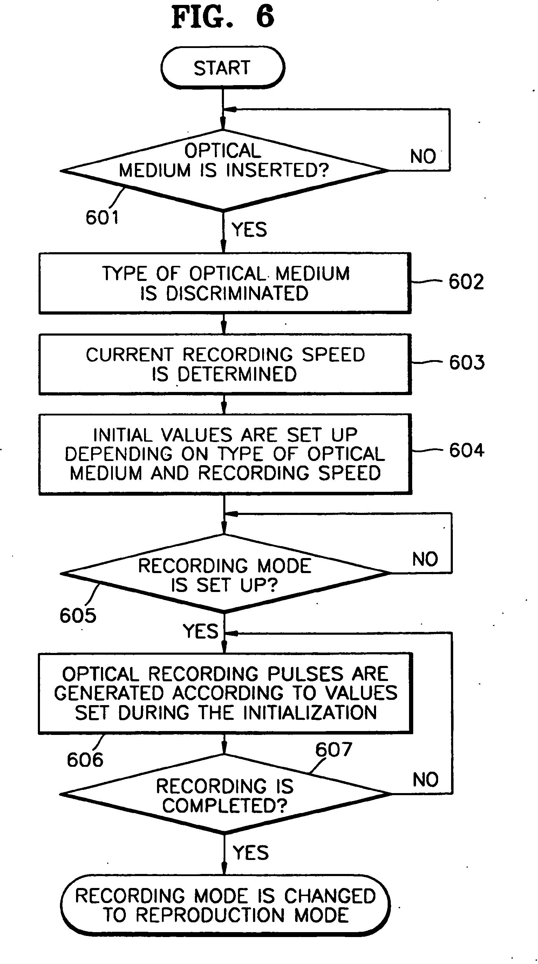

Figure 6 is a flowchart of the optical recording pulse generation method according to the present invention.

If it is determined that an optical medium is inserted in step 601, the type of optical medium is discriminated in step 602. The discrimination criteria are the same as those of the controller 301. Then, in step 603, the current recording speed is determined. The recording speed can be user-defined or predetermined.

In step 604, initial values are set up depending on the type of optical medium and the recording speed. In this case, the values of the pulses included in the multi-pulse patterns of the optical recording pulse are also set up. In particular, as described above, the controller 301 can set the width of the pulses within the pulse chain as one value or at least two different values. In the step, where the one value or the two different values should be assigned within the multi-pulse chain is determined. For example, as shown in Figures 4(b) through 4(e), it is determined that the width of the first N multi-pulses is set to be T_{MP1} while that of the remaining multi-pulses is set to be T_{MP2} within the multi-pulse chain, and it is determined in which order the determined widths of the multiple pulses can be arranged.

If the initial values and the recording mode are set up completely, the optical recording pulses are generated in step 606 according to the values set during the initialization. The generated optical recording pulse is as shown in Figure 4(b) through 4(e).

In step 607, if it is judged that the recording has not completed in step 607, step 606 is performed again so that the optical recording pulse can be generated according to the set conditions. However, if it is judged that the recording has completed in step 607, the recording mode is changed to the reproduction mode.

The present invention generates optical recording pulses where multi-pulses have one pulse width or at least two different pulse widths within the multi-pulse chain depending on the type of the optical media, the recording speed, or the CAV recording. Then, the configuration of the domain created on the optical media will be nearly close to that of the ideal domain. Jitter will be reduced and cross erasure between adjacent tracks, which may be caused by the domain configuration, will be prevented in any high-density, high-speed recording environments. In addition, cross-talk between adjacent tracks, which may be generated due to the domain configuration during reproduction, can be prevented.

Although a few preferred embodiments have been shown and described, it will be appreciated by those skilled in the art that various changes and modifications might be made without departing from the scope of the invention, as defined in the appended claims.

## Claims

1. An apparatus for generating an optical recording pulse having a first pulse, a multi-pulse pattern that includes multi-pulses (T_{MP}), a last pulse and a cooling pulse to record Non Return to Zero Inverted (NRZI) data, the apparatus comprising:
a recording pulse generator (303) for generating an optical recording pulse;
**characterised by**:
a controller (301) for identifying a type of optical recording medium to be recorded and controlling the recording pulse generator (303) so that according to the identified type of optical medium or a set recording speed, the width (T_{MP}) of the multi-pulses forming the multi-pulse pattern used to create one mark is set to at least 2 different values (T_{MP1}, T_{MP2}).

2. The optical recording pulse generating apparatus of claim 1, wherein the controller (301) determines where at least two different widths (T_{MP1}, T_{MP2}) of the multi-pulses (T_{PM}) should exist on the multi-pulse pattern of the optical recording pulse.

3. The optical recording pulse generating apparatus of claim 1 or 2, wherein the controller (301) determines the width of the multi-pulses (T_{PM}) in consideration of whether a CAV has been recorded.

4. The optical recording pulse generating apparatus of any preceding claim, wherein the controller (301) determines the width of the multi-pulses (T_{PM}) during an initialization.

5. The optical recording pulse generating apparatus of any preceding claim, further comprising:
an NRZI detector (302) for detecting a type of the inputted NRZI data and providing the detected results to the recording pulse generator (303).

6. The optical recording pulse generating apparatus of any preceding claim, wherein the controller (301) is arranged to set the width of the multi-pulses (T_{PM}) to be a fixed value within the multi-pulse pattern or to have at least two values depending on the type of optical medium or the set recording speed.

7. The optical recording pulse generating apparatus of any preceding claim, wherein the controller (301) controls the widths (T_{MP1}, T_{MP2}) of the multi-pulses (T_{PM}) so that there can exist multi-pulses having at least two different widths (T_{MP1}, T_{MP2}) within the multi-pulse pattern.

8. A method for generating an optical recording pulse having a first pulse, a multi-pulse pattern that includes multi-pulses (T_{PM}), a last pulse and a cooling pulse to record Non Return to Zero Inverted (NRZI) data, the method comprising:
generating an optical recording pulse;
**characterised by**:
identifying a type of optical recording medium to be recorded and setting a recording mode so that, depending on the identified type of an optical medium or the recording speed, the width (T_{MP}) of the multi-pulses forming the multi-pulse pattern used to create one mark is set to at least 2 different values (T_{MP1}, T_{MP2}); and
generating the optical recording pulse according to the set widths (T_{MP1}, T_{MP2}) of the multi-pulses (T_{PM}).

9. The optical recording pulse generation method of claim 8, wherein setting up further includes:
determining where at least two different widths (T_{MP1}, T_{MP2}) of the multi-pulses (T_{PM}) should exist on the multi-pulse pattern of the optical recording pulse.

10. The optical recording pulse generation method of claim 8, wherein in the setting up, a CAV recording is considered in order to determine the width of the multi-pulse.

11. The optical recording pulse generation method of claim 8, wherein setting up is performed during initialization.

## Patentansprüche

1. Vorrichtung zum Erzeugen von optischen Aufzeichnungspulsen mit einem ersten Puls, einem Multipulsmuster, das Multipulse (T_{MP}) beinhaltet, einem letzten Puls und einem Kühlpuls zum Aufzeichnen von Non-Return-to-Zero-Inverted-Daten (NRZI), wobei die Vorrichtung umfasst:
einen Aufzeichnungspulsgenerator (303) zum Erzeugen eines optischen Aufzeichnungspulses;
**gekennzeichnet durch:**
eine Steuereinheit (301) zum Identifizieren eines Typs des optischen Aufzeichnungsmediums, auf das aufgezeichnet werden soll, und Steuern des Aufzeichnungspulsgenerators (303), so dass entsprechend dem identifizierten Typ des optischen Mediums oder einer festgesetzten Aufzeichnungsgeschwindigkeit die Breite (T_{MP}) der Multipulse, die das Multipulsmuster bilden, das zum Erzeugen einer Marke verwendet wird, auf zumindest 2 unterschiedliche Werte (T_{MP1}, T_{MP2}) festgesetzt wird.

2. Vorrichtung zum Erzeugen von optischen Aufzeichnungspulsen nach Anspruch 1, wobei die Steuereinheit (301) bestimmt, wo zumindest zwei unterschiedliche Breiten (T_{MP1}, T_{MP2}) der Multipulse (T_{PM}) auf dem Multipulsmuster des optischen Aufzeichnungspulses bestehen sollen.

3. Vorrichtung zum Erzeugen von optischen Aufzeichnungspulsen nach Anspruch 1 oder 2, wobei die Steuereinheit (301) die Breite der Multipulse (T_{PM}) unter Berücksichtigung dessen bestimmt, ob eine CAV aufgezeichnet worden ist.

4. Vorrichtung zum Erzeugen von optischen Aufzeichnungspulsen nach einem vorhergehenden Anspruch, wobei die Steuereinheit (301) die Breite der Multipulse (T_{PM}) während einer Initialisierung bestimmt.

5. Vorrichtung zum Erzeugen von optischen Aufzeichnungspulsen nach einem vorhergehenden Anspruch, weiterhin umfassend:
einen NRZI-Detektor (302) zum Erfassen eines Typs der eingegebenen NRZI-Daten und zum Bereitstellen der erfassten Ergebnisse an den Aufzeichnungspulsgenerator (303).

6. Vorrichtung zum Erzeugen von optischen Aufzeichnungspulsen nach einem vorhergehenden Anspruch, wobei die Steuereinheit (301) dazu eingerichtet ist, die Breite der Multipulse (T_{PM}) auf einen festen Wert innerhalb des Multipulsmusters oder auf zwei Werte festzusetzen, in Abhängigkeit von dem Typ des optischen Mediums oder der festgesetzten Aufzeichnungsgeschwindigkeit.

7. Vorrichtung zum Erzeugen von optischen Aufzeichnungspulsen nach einem vorhergehenden Anspruch, wobei die Steuereinheit (301) die Breiten (T_{MP1}, T_{MP2}) der Multipulse (T_{PM}) steuert, so dass Multipulse mit zumindest zwei unterschiedlichen Breiten (T_{MP1}, T_{MP2}) innerhalb des Multipulsmusters bestehen können.

8. Verfahren zum Erzeugen von optischen Aufzeichnungspulsen mit einem ersten Puls, einem Multipulsmuster, das Multipulse (T_{PM}) beinhaltet, einem letzten Puls und einem Kühlpuls zum Aufzeichnen von Non-Return-to-Zero-Inverted-Daten (NRZI), wobei das Verfahren umfasst:
Erzeugen eines optischen Aufzeichnungspulses;
**gekennzeichnet durch:**
Identifizieren eines Typs des optischen Aufzeichnungsmediums, auf das aufgezeichnet werden soll, und Festsetzen eines Aufzeichnungsmodus, so dass in Abhängigkeit von dem identifizierten Typ eines optischen Mediums oder der Aufzeichnungsgeschwindigkeit die Breite (T_{MP}) des Multipulses, der das Multipulsmuster bildet, das zum Erzeugen einer Marke verwendet wird, auf zumindest 2 unterschiedliche Werte (T_{MP1}, T_{MP2}) festgesetzt wird; und
Erzeugen des optischen Aufzeichnungspulses entsprechend der festgesetzten Breiten (T_{MP1}, T_{MP2}) des Multipulses (T_{PM}).

9. Verfahren zum Erzeugen von optischen Aufzeichnungspulsen nach Anspruch 8, wobei das Einrichten weiterhin umfasst:
Bestimmen, wo zumindest zwei unterschiedliche Breiten (T_{MP1}, T_{MP2}) der Multipulse (T_{PM}) auf dem Multipulsmuster des optischen Aufzeichnungsmediums bestehen soll.

10. Verfahren zum Erzeugen von optischen Aufzeichnungspulsen nach Anspruch 8, wobei während des Einrichtens eine CAV-Aufzeichnung berücksichtigt wird, um die Breite des Multipulses zu bestimmen.

11. Verfahren zum Erzeugen von optischen Aufzeichnungspulsen nach Anspruch 8, wobei das Einrichten während der Initialisierung durchgeführt wird.

## Revendications

1. Appareil pour générer une impulsion d'enregistrement optique ayant une première impulsion, un motif multi-impulsion qui comprend de multiples impulsions (T_{MP}), une dernière impulsion et une impulsion de refroidissement pour enregistrer des données de non-retour à zéro inversé (NRZI), l'appareil comprenant :
un générateur d'impulsions d'enregistrement (303) pour générer une impulsion d'enregistrement optique ;
**caractérisé par** :
un dispositif de commande (301) pour identifier un type de support d'enregistrement optique à enregistrer et commander le générateur d'impulsions d'enregistrement (303) de sorte que, selon le type de support optique identifié ou une vitesse d'enregistrement réglée, la largeur (T_{MP}) des multiples impulsions formant le motif multi-impulsion utilisé pour créer une marque soit réglée à au moins deux valeurs différentes (T_{MP1}, T_{MP2}).

2. Appareil de génération d'impulsions d'enregistrement optique selon la revendication 1, dans lequel le dispositif de commande (301) détermine le point où au moins deux largeurs différentes (T_{MP1}, T_{MP2}) des multiples impulsions (T_{PM}) doivent exister sur le motif multi-impulsion de l'impulsion d'enregistrement optique.

3. Appareil de génération d'impulsions d'enregistrement optique selon la revendication 1 ou 2, dans lequel le dispositif de commande (301) détermine la largeur des multiples impulsions (T_{PM}) selon qu'une CAV a été enregistrée ou non.

4. Appareil de génération d'impulsions d'enregistrement optique selon l'une quelconque des revendications précédentes, dans lequel le dispositif de commande (301) détermine la largeur des multiples impulsions (T_{PM}) au cours d'une initialisation.

5. Appareil de génération d'impulsions d'enregistrement optique selon l'une quelconque des revendications précédentes, comprenant en outre :
un détecteur de NRZI (302) pour détecter un type de données NRZI saisies et fournir les résultats détectés au générateur d'impulsions d'enregistrement (303).

6. Appareil de génération d'impulsions d'enregistrement optique selon l'une quelconque des revendications précédentes, dans lequel le dispositif de commande (301) est aménagé pour régler la largeur des multiples impulsions (T_{PM}) à une valeur fixe dans le motif multi-impulsion ou pour avoir au moins deux valeurs dépendant du type de support optique ou de la vitesse d'enregistrement réglée.

7. Appareil de génération d'impulsions d'enregistrement optique selon l'une quelconque des revendications précédentes, dans lequel le dispositif de commande (301) commande les largeurs (T_{MP1}, T_{MP2}) des multiples impulsions (T_{PM}) de sorte qu'il puisse exister des multiples impulsions ayant au moins deux largeurs différentes (T_{MP1}, T_{MP2}) dans le motif multi-impulsion.

8. Procédé pour générer une impulsion d'enregistrement optique ayant une première impulsion, un motif multi-impulsion qui comprend de multiples impulsions (T_{MP}), une dernière impulsion et une impulsion de refroidissement pour enregistrer des données de non-retour à zéro inversé (NRZI), le procédé comprenant :
la génération d'une impulsion d'enregistrement optique ;
**caractérisé par** :
l'identification d'un type de support d'enregistrement optique à enregistrer et le réglage d'un mode d'enregistrement de sorte que, selon le type identifié d'un support optique ou la vitesse d'enregistrement, la largeur (T_{MP}) des multiples impulsions formant le motif multi-impulsion utilisé pour créer une marque soit réglée à au moins deux valeurs différentes (T_{MP1}, T_{MP2}) ; et
la génération de l'impulsion d'enregistrement optique selon les largeurs réglées (T_{MP1}, T_{MP2}) des multiples impulsions (T_{MP}).

9. Procédé de génération d'impulsions d'enregistrement optique selon la revendication 8, dans lequel le réglage comprend en outre :
la détermination du point où au moins deux largeurs différentes (T_{MP1}, T_{MP2}) des multiples impulsions (T_{MP}) doivent exister sur le motif multi-impulsion de l'impulsion d'enregistrement optique.

10. Procédé de génération d'impulsions d'enregistrement optique selon la revendication 8, dans lequel, dans le réglage, on considère un enregistrement de CAV pour déterminer la largeur de la multiple impulsion.

11. Procédé de génération d'impulsions d'enregistrement optique selon la revendication 8, dans lequel le réglage est effectué au cours de l'initialisation.
